# EUROPÄISCHE PATENTSCHRIFT

(11) **EP 3 470 643 B1**
(45) Veröffentlichungstag und Bekanntmachung des Hinweises auf die Patenterteilung: **27.11.2019**
(21) Anmeldenummer: 18197405.6
(22) Anmeldetag: 28.09.2018
(51) Int. Cl.: F01N 13/08, F01N 13/18, F16L 57/00

(54) **PARTIKELFALLE ZUM AUFFANGEN VON PARTIKELN AUS EINEM HOHLKÖRPER**
PARTICLE TRAP FOR CATCHING PARTICLES FROM A HOLLOW BODY
PIÈGE À PARTICULES PERMETTANT DE CAPTURER DES PARTICULES D'UN CORPS CREUX

(30) Priorität: 10.10.2017 DE 102017123545
(43) Veröffentlichungstag der Anmeldung: 17.04.2019
(73) Patentinhaber: Witzenmann GmbH, 75175 Pforzheim (DE)
(72) Erfinder: Noltenius, Carsten, 75399 Unterreichenbach (DE)
(74) Vertreter: Lemcke, Brommer & Partner Patentanwälte Partnerschaft mbB

(56) Entgegenhaltungen:
- DE-U1- 20 301 447
- DE-U1-202006 011 404
- JP-A- H10 176 787
- US-A- 2 345 029
- US-A- 2 737 205

## Beschreibung

Die Erfindung betrifft eine Partikelfalle zum Auffangen von Partikeln aus einem Hohlkörper, insbesondere aus einem rohrförmigen Leitungselement, gemäß Anspruch 1.

Außerdem betrifft die Erfindung einen Hohlkörper, insbesondere ein rohrförmiges Leitungselement, mit einer Partikelfalle gemäß Anspruch 8.

Des Weiteren betrifft die Erfindung eine Verwendung einer Partikelfalle zum Einfangen von Partikeln aus einem Hohlkörper, insbesondere aus einem rohrförmigen Leitungselement, während dessen Transports gemäß Anspruch 13.

Bei der Herstellung und Weiterverarbeitung von Bauteilen für elektronische oder mechanische Geräte oder deren Komponenten kommt es zur Bildung von unterschiedlichen Schmutzpartikeln. Derartige Partikel werden unter anderem durch Sägen oder Fräsen der betreffenden Bauteile während des Herstellungsprozesses oder auch beim Einbau dieser Bauteile gebildet und weisen häufig eine Partikelgröße im Bereich von 5 bis 1000 µm auf. Je nach Material des bearbeiteten Bauteils oder des hierfür verwendeten Werkzeugs können die Partikel aus Metall, Mineralien, Keramiken, organischen Fasern oder Polymeren bestehen.

Aufgrund immer kleiner werdender Abmessungen von elektronischen und mechanischen Geräten oder deren Komponenten kann das Eindringen dieser Partikel zu einer Beschädigung und damit einer Einschränkung der Funktionalität führen. In Brennkraftmaschinen oder Abgasanlagen von Automobilen können derartige Partikel beispielsweise zum Verstopfen von Ventilen, Verklemmen von Schiebern, Kurzschlüssen von elektronischen Schaltungen, Undichtigkeiten in hydraulischen Drucksystemen, Schädigung von Lagerelementen oder einem abrasiven Verschleiß führen, wobei sämtliche fluidführende Systeme sowie elektronische Bauteile betroffen sein können. Daher spielt eine technische Sauberkeit von Bauteilen, also eine hinreichend geringe Kontamination sauberkeitssensibler technischer Bauteile mit schädlichen Partikeln, nicht nur während deren Verwendung, sondern bereits vor deren Einbau eine wesentliche Rolle.

Untersuchungen des Anmelders haben ergeben, dass bei der Herstellung von Hohlkörpern, wie beispielsweise Schläuchen, Rohren oder Behältern, Partikel entstehen, welche trotz nachfolgender Reinigungsschritte zumindest teilweise in den Hohlkörpern zurückbleiben, da diese oft im Innenbereich der Hohlkörper haften bleiben. Bei einem darauffolgenden Transport der fertiggestellten Hohlkörper werden diese Partikel aufgrund von Erschütterungen gelockert und bleiben als lose Partikel im Hohlkörper zurück. Somit stellen diese Partikel bei der Weiterverarbeitung der Hohlkörper und deren Verwendung durch Einbau in mechanische oder elektronische Geräte oder Komponenten eine hohe Gefährdung dar. Somit ist es wünschenswert, diese Partikel bereits während des Transports oder im Rahmen einer anschließenden Lagerung der Hohlkörper aus diesen zu entfernen.

Zur Entfernung magnetischer Partikel geht aus der US 2,345,029 A ein als Partikelfalle ausgebildeter magnetischer Stopfen für Getriebegehäuse und dergleichen hervor. Dieser Stopfen wird in eine Gewindeöffnung des Getriebegehäuses eingeschraubt. Aufgrund seiner magnetischen Eigenschaften kann es magnetische Partikel aus dem Gehäuseinneren einfangen und binden. Da ein bei der Herstellung von Hohlkörpern anfallender Anteil an magnetischen Partikeln im Vergleich zu sonstigen, nicht-magnetischen Partikel gering ist, wird die technische Sauberkeit durch einen solchen magnetischen Stopfen nur geringfügig verbessert und es sind zusätzliche Reinigungsschritte des Hohlkörpers notwendig. Die US 2,737,205 A beschreibt einen elastischen Verschluss für Rohröffnungen, welcher einen Innenbereich des Rohres vor Korrosion und Eindringen von Schmutzpartikeln während dessen Lagerung im Freien schützen soll.
Der vorliegenden Erfindung liegt daher die Aufgabe zugrunde, eine Partikelfalle sowie eine Verwendung dieser Partikelfalle zum Auffangen von Partikeln aus einem Hohlkörper anzugeben, wodurch die technische Sauberkeit von Hohlkörpern aufgrund einer Verringerung der im Hohlkörper verbleibenden Anzahl von Partikeln verbessert wird.

Diese Aufgabe wird erfindungsgemäß durch eine Partikelfalle mit den Merkmalen des Anspruchs 1, durch einen Hohlkörper mit Partikelfalle mit den Merkmalen des Anspruchs 8 sowie die Verwendung einer Partikelfalle mit den Merkmalen des Anspruchs 13 gelöst.

Vorteilhafte Weiterbildungen der erfindungsgemäßen Idee sind Gegenstand von Unteransprüchen.

Eine erfindungsgemäße Partikelfalle zum Auffangen von Partikeln aus einem Hohlkörper, insbesondere aus einem rohrförmigen Leitungselement, weist auf: eine Verschlusskappe, die eine umfänglich geschlossene Wandung und einen die Wandung an einer Stirnseite verschließenden Bodenbereich umfasst, wobei die Wandung und der Bodenbereich einen Innenbereich der Verschlusskappe definieren bzw. umschließen; sowie ein Haftelement, das an der Verschlusskappe angeordnet ist und zur dauerhaften Fixierung der Partikel dient, wobei das Haftelement als beidseitig klebende Folie ausgebildet ist.

Hierbei liegt es im Rahmen der Erfindung, dass die Verschlusskappe als einseitig geschlossener Hohlzylinder mit im Wesentlichen kreisförmigem oder ovalem Bodenbereich ausgebildet ist. Es kann jedoch auch eine Verschlusskappe mit viereckigem Bodenbereich und Wandung vorgesehen sein. Die Erfindung ist jedoch hierauf nicht beschränkt. Vielmehr erlaubt eine flexible Formgebung der Verschlusskappe eine optimale Anpassung der Partikelfalle an die Geometrie des Hohlkörpers. Die beidseitig klebende Folie wird mit einer der beiden Klebeseiten auf die Verschlusskappe aufgeklebt, während die zweite Klebeseite zu Fixierung der Partikel dient, wodurch ein einfaches Aufkleben der Folie auf Verschlusskappe der Partikelfalle ermöglicht wird. Derartige beidseitig klebende Folien sind zudem vielfältig kommerziell erhältlich und kostengünstig.

In einer vorteilhaften Ausführungsform der Partikelfalle ist das Haftelement auf einer dem Innenbereich zugewandten Seite der Verschlusskappe angeordnet. Alternativ befindet es sich auf einer dem Innenbereich abgewandten Außenseite der Verschlusskappe - je nachdem, ob die Verschlusskappe in eine Öffnung des Hohlkörpers eingesetzt oder auf diese aufgesetzt werden soll.

Eine weitere vorteilhafte Ausgestaltung der Partikelfalle sieht vor, dass das Haftelement am Bodenbereich der Verschlusskappe angeordnet ist. Dadurch kann abhängig von der Formgebung des Hohlkörpers bzw. dessen Öffnung eine optimale Ausrichtung des Haftelements in Bezug auf den Hohlkörper erreicht werden. Ist das Haftelement auf der dem Innenbereich der Verschlusskappe zugewandten Seite des Bodenbereichs angeordnet, so wird zudem ein unerwünschter Kontakt des Haftelements mit dem Hohlkörper vermieden.

Um einen besonders großen Haftbereich für Partikel zu ermöglichen und die Anzahl an aufgefangenen Partikeln zu erhöhen, sieht eine weitere vorteilhafte Ausgestaltung vor, dass das Haftelement eine im Vergleich zur Abmessung im Bodenbereich der Verschlusskappe identische Abmessung aufweist. Es liegt jedoch auch im Rahmen der Erfindung, dass das Haftelement eine im Vergleich zur Abmessung im Bodenbereich der Verschlusskappe geringere Abmessung aufweist. Zumindest eine dem Bodenbereich abgewandte Klebeseite der beidseitig klebenden Folie ist in einer weiteren vorteilhaften Ausgestaltung der erfindungsgemäßen Partikelfalle aus einem dauerklebrigen Haftklebstoff ausgebildet. Es liegt außerdem im Rahmen der Erfindung, dass auch eine Wiederverwendung der Verschlusskappe vorgesehen werden kann, indem eine beidseitig klebende Folie zum Einsatz kommt, welche nach der Benutzung der Partikelfalle vom Verwender von der Verschlusskappe abgezogen und erneuert werden kann. Dies kann dadurch verwirklicht werden, dass auch die dem Bodenbereich zugewandte Klebeseite der beidseitig klebenden Folie aus einem dauerklebrigen Haftklebstoff ausgebildet ist.

In einer weiteren vorteilhaften Ausgestaltung der Partikelfalle ist das Haftelement als eine Haftbeschichtung der Verschlusskappe ausgebildet. Diese kann entweder vollumfänglich auf eine dem Hohlkörper zugewandten Seite der Verschlusskappe oder lediglich in einem Teilbereich der Verschlusskappe aufgetragen werden. Eine derartige Beschichtung kann vorzugsweise aus dauerklebrigen Haftklebstoffen ausgebildet sein. Es sei darauf hingewiesen, dass unter dem Begriff "Haftklebstoff" nicht-aushärtende Klebstoffe zu verstehen sind, wie beispielsweise Polymere auf Acrylat- oder Naturkautschukbasis, Harze, hochviskose Flüssigkeiten oder Kombinationen dieser Materialien, welche permanente Klebrigkeit aufweisen. Die Erfindung ist jedoch nicht auf die Verwendung von dauerklebrigen Haftstoffen als Haftbeschichtung der Verschlusskappe beschränkt. Des Weiteren kann die Beschichtung auf die Verschlusskappe durch Aufstreichen oder Aufsprühen aufgetragen werden.

Die Wandung der Verschlusskappe ist in einer weiteren vorteilhaften Ausgestaltung an einer der genannten Stirnseite gegenüberliegenden anderen Stirnseite der Wandung nach außen hin abgebogen, wodurch ein umlaufender Randbereich ausgebildet ist. Dieser nach außen hin abgebogene Randbereich kann zwischen sich und der Wandung einen Winkel von annährend 0 bis annährend 180°, vorzugsweise einen Winkel von 70 bis 130° einschließen. Es liegt im Rahmen dieser Erfindung, dass dieser nach außen hin abgebogene Randbereich derart ausgebildet ist, dass dieser Randbereich beim Einstecken der Partikelfalle in eine Öffnung des Hohlkörpers an einer die Öffnung umlaufenden Anlagefläche des Hohlkörpers angelegt werden kann, wodurch ein Hineinrutschen der Partikelfalle in den Hohlkörper verhindert wird.

Um das Haftelement vor der Ingebrauchnahme der erfindungsgemäßen Partikelfalle vor Verschmutzungen zu schützen, kann das Haftelement in einer bevorzugten Ausgestaltung mit einer lösbaren oder entfernbaren Abdeckung versehen sein. Diese lösbare Abdeckung kann vor Ingebrauchnahme der erfindungsgemäßen Partikelfalle vom Benutzer in einfacher Weise entfernt werden.

In einer weiteren bevorzugten Ausführungsform weist die lösbare Abdeckung der erfindungsgemäßen Partikelfalle eine im Vergleich zum Haftelement identische Abmessung auf. Hierdurch wird eine vollständige Abdeckung des Haftelements gewährleistet.

Um das Entfernen der lösbaren Abdeckung des Haftelements weiter zu erleichtern, ist diese in einer anderen bevorzugten Ausführungsform als Abziehfolie ausgebildet. Es liegt dabei im Rahmen der Erfindung, dass die Abziehfolie eine Greifhilfe aufweist, welche über die Peripherie der Abziehfolie sowie des Haftelements herausragt. Die Greifhilfe kann beispielsweise in Form einer konvexen Ausbuchtung, eines umlaufenden Randbereichs, als Reißleine oder als Griff ausgebildet sein und erleichtert das Ablösen der Abziefolie durch einen Benutzer.

Ein anderer Aspekt der vorliegenden Erfindung sieht einen Hohlkörper vor, insbesondere ein rohrförmiges Leitungselement, mit einer Partikelfalle mit einem oder mehreren der zuvor erläuterten Merkmale, wobei der Hohlkörper zumindest einen Hohlraum mit einer Öffnung aufweist, an welcher Öffnung die Partikelfalle angeordnet ist, wobei die Verschlusskappe der Partikelfalle die Öffnung verschließt und wobei das Haftelement von dem Hohlraum aus zugänglich ist.

In einer vorteilhaften Ausgestaltung des erfindungsgemäßen Hohlkörpers mit Partikelfalle ist die Partikelfalle auf die Öffnung des Hohlkörpers aufgesetzt oder in die Öffnung hineingesteckt.

Eine alternative Ausgestaltung sieht vor, dass die Partikelfalle mit einer Außenseite des Bodenbereichs der Verschlusskappe voran in die Öffnung des Hohlkörpers eingesteckt ist.

Eine weitere vorteilhafte Variante des erfindungsgemäßen Hohlkörpers mit Partikelfalle besteht darin, dass das Haftelement eine im Vergleich zu einer lichten Weite der Öffnung des Hohlkörpers geringere Abmessung aufweist. Hierdurch kann ein unerwünschtes Anhaften des Haftelements am Hohlkörper verhindert werden. Beim Ablösen der Partikelfalle vom Hohlkörper nach Partikelaufnahme können bei Anhaften des Haftelements unerwünschte Kleberückstände am Hohlkörper zurückbleiben, welche ihrerseits die technische Sauberkeit des Hohlkörpers negativ beeinflussen. Eine derartige Ausgestaltung ermöglicht in vorteilhafter Weise das rückstandsfreie Ablösen der Partikelfalle vom Hohlkörper.

Des Weiteren kann der erfindungsgemäße Hohlkörper mit Partikelfalle in einer weiteren vorteilhaften Ausgestaltung einen (vorzugsweise glattzylindrischen) Anschlussstutzen an seiner Öffnung aufweisen, auf den die Partikelfalle aufgesetzt oder in den die Partikelfalle hineingesteckt ist.

In einer weiteren vorteilhaften Ausgestaltung des erfindungsgemäßen Hohlkörpers mit Partikelfalle weist das Haftelement eine im Vergleich zu einem lichten Innendurchmesser des Anschlussstutzens geringere Abmessung auf. Wie bereits zuvor beschrieben, wird hierdurch ein unerwünschtes Anhaften des Haftelements am Anschlussstutzen verhindert, und mögliche Kleberückstände am Abschlussstutzen werden vermieden.

Eine weitere vorteilhafte Variante des erfindungsgemäßen Hohlkörpers mit einer Partikelfalle sieht vor, dass ein nach außen hin abgebogene Randbereich der Verschlusskappe an einer die Öffnung des Hohlkörpers umschließenden oder begrenzenden Anlagefläche anliegt. Hierdurch kann ein mögliches Hineinrutschen der Partikelfalle in den Hohlkörper verhindert werden. Zudem erleichtert ein derartiger Randbereich das Aufsetzen der Verschlusskappe auf einen Hohlkörper oder Einstecken der Verschlusskappe in den Hohlkörper durch entsprechendes Ergreifen der Verschlusskappe am Randbereich. Selbiges gilt auch für eine Abnahme der Verschlusskappe von der Öffnung des Hohlkörpers. Des Weiteren liegt es im Rahmen der Erfindung, dass an diesem Randbereich ein weiteres Sicherungselement angebracht werden kann, welches die Partikelfalle am Hohlkörper zusätzlich sichert.

Ein weiterer Aspekt der vorliegenden Erfindung ist eine Verwendung einer Partikelfalle zum Einfangen von Partikeln aus einem Hohlkörper, insbesondere aus einem rohrförmigen Leitungselement, während dessen Transports, welcher Hohlkörper zumindest einen Hohlraum mit Öffnung aufweist, auf bzw. an welcher Öffnung die Partikelfalle derart angeordnet wird, dass die Verschlusskappe der Partikelfalle die Öffnung verschließt, wobei die Partikelfalle mit dem Haftelement in Richtung der Öffnung des Hohlkörpers weisend auf die Öffnung des Hohlkörpers aufgesetzt oder in die Öffnung hineingesteckt wird, um Partikel aus dem Hohlkörper dauerhaft zu fixieren.

Eine erste Weiterbildung dieser Verwendung einer Partikelfalle zum Einfangen von Partikeln aus einem Hohlkörper sieht vor, dass die Partikelfalle auf einen Anschlussstutzen an der Öffnung des Hohlkörpers aufgesetzt oder in diesen Anschlussstutzen hineingesteckt wird.

Um ein mögliches Hineinrutschen der Partikelfalle in den Hohlkörper zu verhindern, besteht eine zweite Weiterbildung dieser Verwendung einer Partikelfalle darin, dass der nach außen hin abgebogene Randbereich der Verschlusskappe an eine die Öffnung des Hohlkörpers umschließenden oder begrenzenden Anlagefläche oder an eine die Öffnung des Anschlussstutzens umschließenden Anlagefläche angelegt wird. Wie bereits zuvor erläutert, liegt es auch im Rahmen der Erfindung, dass die Partikelfalle mittels eines zusätzlichen Sicherungselements oder Klipsmechanismus am Hohlkörper gehalten werden kann. Zudem kann der nach außen hin abgebogene Randbereich der Verschlusskappe mit der Anlagefläche verklebt werden.

Da ein derartiger Hohlkörper nach dessen Herstellung und vor dessen Einbau in mechanische Geräte oder Komponenten meist vom Hersteller zum Kunden transportiert werden muss, sieht eine dritte Weiterbildung der Verwendung der Partikelfalle zum Einfangen von Partikeln aus einem Hohlkörper vor, dass der Hohlkörper während dessen Transports derart angeordnet wird, dass die Öffnung des Hohlkörpers nach unten gerichtet ist, wodurch sich gelöste Partikel durch Einwirkung von Schwerkraft zu der Partikelfalle bewegen und dort eingefangen werden.

Es sei darauf hingewiesen, dass im Fall von Hohlkörpern mit mehreren Öffnungen, wie beispielsweise einem rohrförmigen Leitungselement, es vorteilhaft sein kann, wenn auch an der zweiten bzw. an den weiteren Öffnungen jeweils eine Partikelfalle angeordnet wird. Hierdurch wird das Auffangen der Partikel aus dem Hohlraum des Hohlkörpers weiter optimiert, in dem die Anzahl an aufgefangenen Partikel gesteigert wird.

Weitere vorteilhafte Eigenschaften der Erfindung ergeben sich aus der nachfolgenden Beschreibung von Ausführungsbeispielen anhand der Zeichnung.
Figur 1 zeigt ein erstes Ausführungsbeispiel einer erfindungsgemäßen Partikelfalle als Schnittdarstellung mit einem auf einer dem Innenbereich der Verschlusskappe zugewandten Seite der Verschlusskappe angeordneten Haftelement;
Figur 2 zeigt ein zweites Ausführungsbeispiel einer erfindungsgemäßen Partikelfalle als Schnittdarstellung mit einem auf der dem Innenbereich abgewandten Seite der Verschlusskappe angeordneten Haftelement;
Figur 3 zeigt ein erstes Ausführungsbeispiel eines erfindungsgemäßen Hohlkörpers mit einer Partikelfalle als Schnittdarstellung; und
Figur 4 zeigt ein zweites Ausführungsbeispiel eines erfindungsgemäßen Hohlkörpers mit einer Partikelfalle als Schnittdarstellung.

In allen Figuren sind schematische Darstellungen gezeigt. Gleiche Bezugszeichen bezeichnen gleiche oder gleichwirkende Elemente.

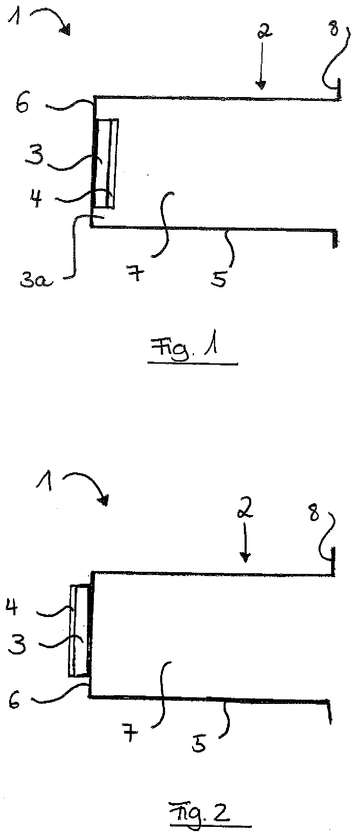

Figur 1 zeigt ein erstes Ausführungsbeispiel einer erfindungsgemäßen Partikelfalle 1. Diese Partikelfalle 1 weist eine Verschlusskappe 2, ein Haftelement 3 sowie eine Abdeckung 4 des Haftelements 3 auf.

Die Verschlusskappe 2 umfasst eine umfänglich geschlossene, hohlzylindrische Wandung 5 und einen die Wandung 5 an einer Stirnseite verschließenden, kreisförmigen Bodenbereich 6, der einstückig mit der Wandung 5 ausgebildet ist. Die Wandung 5 sowie der Bodenbereich 6 umschließen bzw. definieren einen Innenbereich 7 der Verschlusskappe 2. Des Weiteren ist die Wandung 5 an einer dem Bodenbereich 6 gegenüberliegenden Stirnseite nach außen hin rechtwinklig abgebogen, wodurch ein umlaufender Randbereich 8 ausgebildet ist. Im vorliegenden Ausführungsbeispiel ist die Verschlusskappe 2 aus Polyethylen ausgebildet. Die Erfindung ist keinesfalls darauf beschränkt, dass ein solches Material zum Einsatz kommt. Die Verschlusskappe 2 kann auch aus anderen Kunststoffen oder metallischen Werkstoffen oder Legierungen bzw. Kombinationen solcher Werkstoffe ausgebildet sein.

Das Haftelement 3 ist auf einer dem Innenbereich 7 der Verschlusskappe 2 zugewandten Seite des Bodenbereichs 6 angeordnet und als beidseitig klebende, kreisförmige Folie ausgebildet. Wie sich der Figur 1 entnehmen lässt, weist das Haftelement 3 eine geringere Abmessung im Vergleich zum Bodenbereich 6 auf und berührt die Wandung 5 nicht, so dass zwischen Haftelement 3 und Wandung 5 ein umlaufender Spalt 3a verbleibt. Im vorliegenden Ausführungsbespiel basiert das als beidseitig klebende Folie ausgebildete Haftelement 3 auf einem Polyvinylchlorid-Klebeband mit Acrylatklebmasse, jedoch ist das Haftelement 3 nicht hierauf beschränkt. Es kann jedoch auch eine Beschichtung aus dauerklebrigen Haftklebstoffen vorgesehen werden, welche beispielsweise aus Polymeren, Harzen oder hochviskosen Flüssigkeiten ausgebildet sind und aufgestrichen oder aufgesprüht werden. Zudem kann das Haftelement 3 auch den gesamten Bodenbereich 6 und/oder die Wandung 5 bzw. Teile hiervon bedecken.

Um das Haftelement 3 vor dessen Ingebrauchnahme vor Verunreinigungen zu schützen und dessen Funktionalität zu gewährleisten, ist das Haftelement 3 mit einer lösbaren Abdeckung 4 abgedeckt, welche auf der dem Innenbereich 7 zugewandten Seite des Haftelements 3 angeordnet ist. Die Abdeckung 4 ist als kreisförmige Abziehfolie ausgebildet und weist eine im Vergleich zum Haftelement identische Abmessung auf.

Figur 2 zeigt ein weiteres Ausführungsbeispiel einer erfindungsgemäßen Partikelfalle 1, bei welcher das Haftelement 4 auf der dem Innenbereich 7 abgewandten Seite des Bodenbereichs 6 der Verschlusskappe 2 (also außen an der Verschlusskappe) angeordnet und ebenfalls als beidseitig klebende, kreisförmige Folie ausgebildet ist. Alle weiteren Merkmale der Verschlusskappe 2 entsprechen denen, welche in Figur 1 erläutert sind, weshalb auf weitere Einzelheiten nicht einzugehen ist. Auch in diesem Ausführungsbeispiel ist das Haftelement 3 mittels einer als Abziehfolie ausgebildeten Abdeckung 4 vor Verunreinigungen geschützt, welche auf der dem Bodenbereich 6 abgewandten Seite des Haftelements 3 angeordnet ist und dieses vollständig bedeckt.

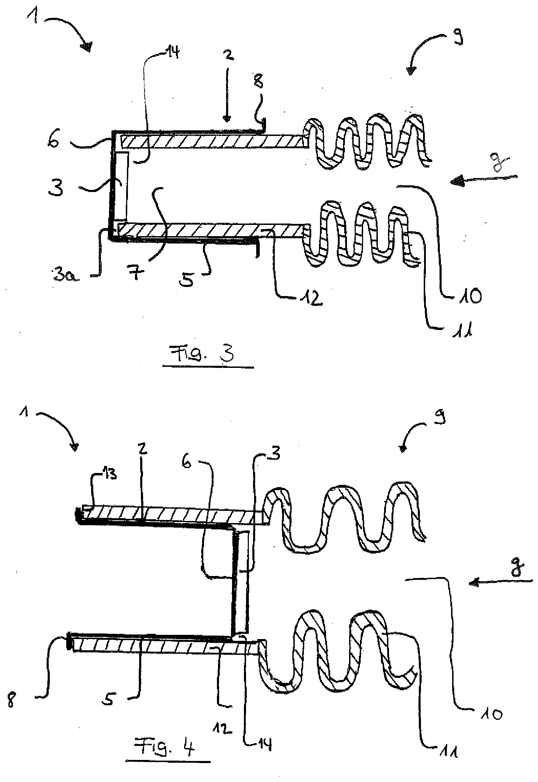

In Figur 3 ist ein Ausführungsbeispiel eines erfindungsgemäßen Hohlkörpers 9 mit Partikelfalle 1 dargestellt. Die Partikelfalle 1 weist einen zu der in Figur 1 beschriebenen Ausgestaltung identischen Aufbau auf, weshalb auf weitere Einzelheiten zunächst nicht einzugehen ist. Allerdings ist die in Figur 1 beschriebene Abdeckung 4 nicht mehr vorhanden, da diese vor Einstecken der Partikelfalle 1 in den Hohlkörper 9 abgezogen wurde. Der Hohlkörper 9 ist exemplarisch als Wellschlauch 11 oder Balg aus Edelstahl ausgebildet, der endständig mit einem hohlzylindrischen Anschlussstutzen 12 verbunden ist und einen Hohlraum 10 umschließt bzw. definiert. Die Erfindung ist keinesfalls auf Hohlkörper 9 in Form eines Wellschlauchs aus Edelstahl mit Anschlussstutzen beschränkt. Es sind auch andere Hohlkörper aus unterschiedlichen Materialien denkbar, beispielsweise glattwandige oder profilierte rohrförmige Leitungselemente oder Behälter. Eine derartige Aufzählung ist jedoch nicht als abschließend anzusehen. Zudem ist das Vorhandensein eines Anschlussstutzens 12 optional, denn die Partikelfalle 1 kann auch auf jede beliebig geformte Öffnung eines Hohlkörpers aufgesetzt werden. Des Weiteren kann der Anschlussstutzen 12 auch einstückig mit dem Hohlkörper 9 ausgebildet sein und ein Anschlussende des Hohlkörpers ausbilden.

Die Partikelfalle 1 ist auf eine dem Wellschlauch 11 gegenüberliegenden Öffnung 14 des Anschlussstutzens 12 derart aufgesetzt, dass die dem Innenbereich 7 zugewandte Seite der Verschlusskappe 2 den Anschlussstutzen 12 umschließt. Dabei liegt eine dem Innenbereich 7 zugewandte Seite der Wandung 5 am Anschlussstutzen 12 flächig an. Die als Hohlzylinder ausgebildete Verschlusskappe 2 weist vorzugsweise einen im Vergleich zur Außenabmessung des Anschlussstutzens 12 geringfügig geringeren Innendurchmesser auf, so dass ein Abrutschen der Partikelfalle 1 nach deren Aufsetzen auf den Anschlussstutzen 12 verhindert wird. Es ist jedoch auch möglich, dass die Partikelfalle 1 mittels eines zusätzlichen Sicherungselements (nicht abgebildet) am Hohlkörper 9 gehalten ist.

Wie sich aus Figur 3 entnehmen lässt, ist das Haftelement 3 aus dem Hohlraum 10 aus zugänglich und ermöglicht daher die Fixierung von losen, im Hohlraum 10 befindlichen Partikeln. Um ein Verkleben des Haftelements 3 mit dem Anschlussstutzen 12 zu verhindern, weist das Haftelement 3 eine im Vergleich zum lichten Innendurchmesser des Anschlussstutzens 12 geringere Abmessung auf und berührt daher den Anschlussstutzen 12 nach Aufsetzen der Partikelfalle 1 nicht. Vorzugsweise erfolgt anschließend, d.h. nach Aufsetzen der Partikelfalle 1 ein Transport oder eine Lagerung des Hohlkörpers 9 dergestalt, dass sich die Partikelfalle 1 in Richtung der Erdbeschleunigung g unterhalb des Hohlkörpers 9 befindet, wie dargestellt.

Figur 4 zeigt ein weiteres Ausführungsbeispiel eines erfindungsgemäßen Hohlkörpers 9 mit Partikelfalle 1. Die Partikelfalle 1 weist einen zu der in Figur 2 beschriebenen Ausgestaltung identischen Aufbau auf, weshalb auf weitere Einzelheiten zunächst nicht einzugehen ist. Auch in diesem Fall ist die lösbare Abdeckung 4 nicht mehr vorhanden, da diese vor Einstecken der Partikelfalle 1 in den Hohlkörper 9 abgezogen wurde.

Wie bereits im zuvor beschriebenen Ausführungsbeispiel (Figur 3) ist der Hohlkörper 9 als Wellschlauch 11 mit vorzugsweise endständig angeformten hohlzylindrischen Anschlussstutzen 12 (oder als Balg) ausgebildet und weist einen Hohlraum 10 auf.

Die Partikelfalle 1 ist mit einer Außenseite des Bodenbereichs 6 der Verschlusskappe 2 voran in die dem Wellschlauch 11 gegenüberliegenden Öffnung 14 des Anschlussstutzens 12 hineingesteckt. Dabei liegt eine dem Innenbereich 7 abgewandte Seite der Wandung 5 von Innen an den Anschlussstutzen 12 flächig an. Die als Hohlzylinder ausgebildete Verschlusskappe 2 weist vorzugsweise einen im Vergleich zu einem Innendurchmesser des Anschlussstutzens 12 geringfügig größeren Außendurchmesser auf, so dass ein Herausfallen der Partikelfalle 1 nach deren Hineinstecken in den Anschlussstutzen 12 verhindert wird.

Um ein Hineinrutschen der Partikelfalle 1 in den als Wellschlauch 11 mit angeformten Anschlussstutzen 12 ausgebildeten Hohlkörper 9 zu verhindern, liegt der nach außen hin abgebogene Randbereich 8 der Verschlusskappe 2 an eine die Öffnung 14 des Anschlussstutzens 12 umlaufende Anlagefläche 13 an. Auch in diesem Ausführungsbeispiel ist es möglich, dass die Partikelfalle 1 mittels eines zusätzlichen Sicherungselements (nicht abgebildet) am Hohlkörper 9 gehalten ist.

Wie sich aus Figur 4 entnehmen lässt, ist das Haftelement 3 aus dem Hohlraum 10 aus zugänglich und ermöglicht daher die Fixierung von losen, im Hohlraum 10 befindlichen Partikeln. Um ein Verkleben des Haftelements 3 mit dem Anschlussstutzen 12 zu verhindern, weist das Haftelement 3 eine im Vergleich zum lichten Innendurchmesser des Anschlussstutzens 12 geringere Abmessung auf und berührt daher den Anschlussstutzen 12 nach Aufsetzen der Partikelfalle 1 nicht.

## Patentansprüche

1. Partikelfalle (1) zum Auffangen von Partikeln aus einem Hohlkörper, insbesondere aus einem rohrförmigen Leitungselement, mit einer Verschlusskappe (2), die eine umfänglich geschlossene Wandung (5) und einen die Wandung (5) an einer Stirnseite verschließenden Bodenbereich (6) umfasst, wobei die Wandung (5) und der Bodenbereich (6) einen Innenbereich (7) der Verschlusskappe (2) umschließen; sowie einem Haftelement (3), das an der Verschlusskappe (2) angeordnet ist und zur dauerhaften Fixierung der Partikel dient,
**dadurch gekennzeichnet,**
**dass** das Haftelement (3) als beidseitig klebende Folie ausgebildet ist.

2. Partikelfalle (1) nach Anspruch 1, bei der das Haftelement (3) auf einer dem Innenbereich (7) zugewandten Seite der Verschlusskappe (2) oder auf einer dem Innenbereich (7) abgewandten Außenseite der Verschlusskappe (2) angeordnet ist.

3. Partikelfalle (1) nach Anspruch 1 oder 2, bei der das Haftelement (3) am Bodenbereich (6) der Verschlusskappe (2) angeordnet ist.

4. Partikelfalle (1) nach einem der Ansprüche 1 bis 3, bei der zumindest eine dem Bodenbereich (6) abgewandte Klebeseite der beidseitig klebenden Folie aus einem dauerklebrigen Haftklebstoff ausgebildet ist.

5. Partikelfalle (1) nach einem der Ansprüche 1 bis 3, bei der das Haftelement (3) als eine Beschichtung der Verschlusskappe (2) ausgebildet ist, vorzugsweise aus einem dauerklebrigen Haftklebstoff.

6. Partikelfalle (1) nach einem der Ansprüche 1 bis 5, bei der die Wandung (5) der Verschlusskappe (2) an einer der Stirnseite gegenüberliegenden anderen Stirnseite einen nach außen hin abgebogenen Randbereich (8) aufweist.

7. Partikelfalle (1) nach einem der Ansprüche 1 bis 6, bei der das Haftelement (3) eine lösbare oder entfernbare Abdeckung (4) aufweist.

8. Hohlkörper (9), insbesondere ein rohrförmiges Leitungselement, mit einer Partikelfalle (1) nach einem der vorangegangenen Ansprüche, wobei der Hohlkörper (9) zumindest einen Hohlraum (10) mit einer Öffnung (15) aufweist, an welcher Öffnung (15) die Partikelfalle (1) angeordnet ist, wobei die Verschlusskappe (2) der Partikelfalle (1) die Öffnung (15) verschließt und wobei das Haftelement (3) von dem Hohlraum (10) aus zugänglich ist.

9. Hohlkörper (9) nach Anspruch 8, wobei die Partikelfalle (1) auf die Öffnung (14) des Hohlkörpers (12) aufgesetzt oder in die Öffnung (15) hineingesteckt ist.

10. Hohlkörper (9) nach Anspruch 8 oder 9, wobei die Partikelfalle (1) mit einer Außenseite des Bodenbereichs (6) der Verschlusskappe (2) voran in die Öffnung (12) des Hohlkörpers (10) eingesteckt ist.

11. Hohlkörper (9) nach einem der Ansprüche 8 bis 10, wobei das Haftelement (3) eine im Vergleich zu einer lichten Weite der Öffnung (14) des Hohlkörpers (9) geringere Abmessung aufweist.

12. Hohlkörper (9) nach einem der Ansprüche 8 bis 11, wobei der nach außen hin abgebogene Randbereich (8) der Verschlusskappe an eine die Öffnung (12) des Hohlkörpers (9) umschließenden Anlagefläche (13) anliegt.

13. Verwendung einer Partikelfalle (1) nach einem der Ansprüche 1 bis 7 zum Einfangen von Partikeln aus einem Hohlkörper (9), insbesondere aus einem rohrförmigen Leitungselement, während dessen Transports, welcher Hohlkörper (9) zumindest einen Hohlraum (10) mit Öffnung (15) aufweist, an welcher Öffnung (15) die Partikelfalle (1) derart angeordnet wird, dass die Verschlusskappe (2) der Partikelfalle (1) die Öffnung (15) verschließt, wobei die Partikelfalle (1) mit dem Haftelement (3) in Richtung der Öffnung (15) des Hohlkörpers (9) weisend auf die Öffnung (15) des Hohlkörpers (9) aufgesetzt oder in die Öffnung (15) hineingesteckt wird, um Partikel aus dem Hohlkörper (9) dauerhaft zu fixieren.

14. Verwendung nach Anspruch 13, wobei die Partikelfalle (1) auf einen Anschlussstutzen (12) an der Öffnung (15) des Hohlkörpers (9) aufgesetzt oder in diesen Anschlussstutzen (12) hineingesteckt wird.

15. Verwendung nach Anspruch 13 oder 14, bei der der nach außen hin abgebogene Randbereich (8) der Verschlusskappe (2) an eine die Öffnung (15) des Hohlkörpers (9) umschließenden Anlagefläche (16) oder an eine die Öffnung (14) des Anschlussstutzens (12) umschließenden Anlagefläche (13) angelegt wird.

## Claims

1. Particle trap (1) for capturing particles from a hollow body, especially from a tubular duct element, having
a closure cap (2) comprising a wall (5) which is closed around its circumference and a base region (6) which closes the wall (5) at one end, wherein the wall (5) and the base region (6) enclose an interior region (7) of the closure cap (2); and
an adhesive element (3) which is arranged on the closure cap (2) and serves for permanent fixing of the particles,
**characterised in that**
the adhesive element (3) is in the form of a double-sided adhesive film.

2. Particle trap (1) according to claim 1, wherein the adhesive element (3) is arranged on a side of the closure cap (2) that faces towards the interior region (7) or on an outer side of the closure cap (2) that faces away from the interior region (7).

3. Particle trap (1) according to claim 1 or 2, wherein the adhesive element (3) is arranged on the base region (6) of the closure cap (2).

4. Particle trap (1) according to any one of claims 1 to 3, wherein at least one adhesive side of the double-sided adhesive film, which adhesive side faces away from the base region (6), is formed by a permanently tacky pressure-sensitive adhesive.

5. Particle trap (1) according to any one of claims 1 to 3, wherein the adhesive element (3) is in the form of a coating on the closure cap (2), preferably made of a permanently tacky pressure-sensitive adhesive.

6. Particle trap (1) according to any one of claims 1 to 5, wherein the wall (5) of the closure cap (2) has an outwardly bent edge region (8) at its other end located opposite the afore-mentioned end.

7. Particle trap (1) according to any one of claims 1 to 6, wherein the adhesive element (3) is a releasable or removable covering (4).

8. Hollow body (9), especially a tubular duct element, having a particle trap (1) according to any one of the preceding claims, wherein the hollow body (9) has at least one hollow space (10) having an opening (15), at which opening (15) the particle trap (1) is arranged, wherein the closure cap (2) of the particle trap (1) closes the opening (15) and wherein the adhesive element (3) is accessible from the hollow space (10).

9. Hollow body (9) according to claim 8, wherein the particle trap (1) has been mounted on the opening (14) of the hollow body (12) or inserted into the opening (15).

10. Hollow body (9) according to claim 8 or 9, wherein the particle trap (1) has been inserted into the opening (12) of the hollow body (10) with an outer side of the base region (6) of the closure cap (2) at the front.

11. Hollow body (9) according to any one of claims 8 to 10, wherein the adhesive element (3) has smaller dimensions in comparison with an inside width of the opening (14) of the hollow body (9).

12. Hollow body (9) according to any one of claims 8 to 11, wherein the outwardly bent edge region (8) of the closure cap (2) rests against a contact surface (13) surrounding the opening (12) of the hollow body (9).

13. Use of a particle trap (1) according to any one of claims 1 to 7 for capturing particles from a hollow body (9), especially from a tubular duct element, during the transport thereof, which hollow body (9) has at least one hollow space (10) having an opening (15), at which opening (15) the particle trap (1) is arranged in such a way that the closure cap (2) of the particle trap (1) closes the opening (15), wherein the particle trap (1) is mounted on the opening (15) of the hollow body (9) or inserted into the opening (15) with the adhesive element (3) pointing in the direction of the opening (15) of the hollow body (9) in order to effect permanent fixing of particles from the hollow body (9).

14. Use according to claim 13, wherein the particle trap (1) is mounted on a connection piece (12) at the opening (15) of the hollow body (9) or inserted into that connection piece (12).

15. Use according to claim 13 or 14, wherein the outwardly bent edge region (8) of the closure cap (2) is applied to a contact surface (16) surrounding the opening (15) of the hollow body (9) or to a contact surface (13) surrounding the opening (14) of the connection piece (12).

## Revendications

1. Piège à particules (1) pour capturer des particules provenant d'un corps creux, en particulier d'un élément de conduite tubulaire, comportant
un capuchon de fermeture (2) qui comprend une paroi (5) fermée circonférentiellement et une zone de fond (6) qui ferme la paroi (5) à une face frontale, la paroi (5) et la zone de fond (6) renfermant une zone intérieure (7) du capuchon de fermeture (2) ; et
un élément adhésif (3) qui est disposé sur le capuchon de fermeture (2) et sert à fixer les particules de façon permanente,
**caractérisé en ce**
**que** l'élément adhésif (3) est réalisé sous la forme d'un film adhésif double face.

2. Piège à particules (1) selon la revendication 1, dans lequel l'élément adhésif (3) est disposé sur un côté du capuchon de fermeture (2) tourné vers la zone intérieure (7) ou sur un côté extérieur du capuchon de fermeture (2) opposé à la zone intérieure (7).

3. Piège à particules (1) selon la revendication 1 ou 2, dans lequel l'élément adhésif (3) est disposé sur la zone de fond (6) du capuchon de fermeture (2).

4. Piège à particules (1) selon l'une des revendications 1 à 3, dans lequel au moins une face adhésive du film adhésif double face opposée à la zone de fond (6) est constituée d'un adhésif à collage permanent.

5. Piège à particules (1) selon l'une des revendications 1 à 3, dans lequel l'élément adhésif (3) est réalisé sous la forme d'un revêtement du capuchon de fermeture (2), de préférence constituée d'un adhésif à collage permanent.

6. Piège à particules (1) selon l'une des revendications 1 à 5, dans lequel la paroi (5) du capuchon de fermeture (2) présente sur une autre face frontale opposée à la face frontale une zone de bord (8) pliée vers l'extérieur.

7. Piège à particules (1) selon l'une des revendications 1 à 6, dans lequel l'élément adhésif (3) présente un couvercle détachable ou amovible (4).

8. Corps creux (9), en particulier élément de conduite tubulaire, comportant un piège à particules (1) selon l'une des revendications précédentes, le corps creux (9) présentant au moins une cavité (10) avec une ouverture (15), sur laquelle ouverture (15) le piège à particules (1) est disposé, le capuchon de fermeture (2) du piège à particules (1) fermant l'ouverture (15) et l'élément adhésif (3) étant accessible depuis la cavité (10).

9. Corps creux (9) selon la revendication 8, dans lequel le piège à particules (1) est placé sur l'ouverture (14) du corps creux (12) ou inséré dans l'ouverture (15).

10. Corps creux (9) selon la revendication 8 ou 9, dans lequel le piège à particules (1) est inséré dans l'ouverture (12) du corps creux (10) avec un côté extérieur de la zone de fond (6) du capuchon de fermeture (2) en avant.

11. Corps creux (9) selon l'une des revendications 8 à 10, dans lequel l'élément adhésif (3) présente une dimension inférieure à une largeur libre de l'ouverture (14) du corps creux (9).

12. Corps creux (9) selon l'une des revendications 8 à 11, dans lequel la zone de bord (8) du capuchon de fermeture pliée vers l'extérieur est appliquée contre une surface d'application (13) entourant l'ouverture (12) du corps creux (9).

13. Utilisation d'un piège à particules (1) selon l'une des revendications 1 à 7 pour capturer des particules provenant d'un corps creux (9), en particulier d'un élément de conduite tubulaire, pendant son transport, lequel corps creux (9) présente au moins une cavité (10) avec une ouverture (15), sur laquelle ouverture (15) le piège à particules (1) est disposé de telle sorte que le capuchon de fermeture (2) du piège à particules (1) ferme l'ouverture (15), le piège à particules (1) étant placé avec l'élément adhésif (3) dirigé vers l'ouverture (15) du corps creux (9) sur l'ouverture (15) du corps creux (9) ou étant inséré dans l'ouverture (15) afin de fixer de manière permanente des particules provenant du corps creux (9).

14. Utilisation selon la revendication 13, dans laquelle le piège à particules (1) est placé sur une tubulure de raccordement (12) à l'ouverture (15) du corps creux (9) ou inséré dans cette tubulure de raccordement (12).

15. Utilisation selon la revendication 13 ou 14, dans laquelle la zone de bord (8) pliée vers l'extérieur du capuchon de fermeture (2) est appliquée contre une surface d'application (16) entourant l'ouverture (15) du corps creux (9) ou contre une surface d'application (13) entourant l'ouverture (14) de la tubulure de raccordement (12).
